# EUROPEAN PATENT SPECIFICATION

(11) **EP 3 709 392 B1**
(45) Date of publication and mention of the grant of the patent: **26.10.2022**
(21) Application number: 20159788.7
(22) Date of filing: 27.02.2020
(51) Int. Cl.: H01M 50/103, H01M 50/538, H01M 10/04, H01M 10/0587, H01M 50/54, H01M 10/052

(54) **SECONDARY BATTERY**
SEKUNDÄRBATTERIE
BATTERIE SECONDAIRE

(30) Priority: 11.03.2019 KR 20190027751
(43) Date of publication of application: 16.09.2020
(73) Proprietor: Samsung SDI Co., Ltd., Gyeonggi-do 17084 (KR)
(72) Inventor: Kwak, Seung Ho, 17084 Yongin-si, Gyeonggi-do (KR); Go, Joo Young, 17084 Yongin-si, Gyeonggi-do (KR)
(74) Representative: Gulde & Partner

(56) References cited:
- EP-A1- 3 043 404
- EP-A1- 3 451 416

## Description

### CROSS-REFERENCE TO RELATED APPLICATION

### BACKGROUND

### 1. Field

Aspects of embodiments of the present disclosure relate to a secondary battery.

### 2. Description of the Related Art

Unlike a primary battery that cannot be charged, a secondary battery can be charged and discharged. Low-capacity secondary batteries packaged in the form of a pack including a single battery cell may be used as the power source for various portable small-sized electronic devices, such as, for example, cellular phones or camcorders, while high-capacity secondary batteries having several tens to several hundreds of battery cells connected to one another may be used as a power source for motor drives, such as those in hybrid vehicles, electric vehicles, or the like.

The secondary battery may be configured by accommodating an electrode assembly including a positive electrode plate, a negative electrode plate, and a separator positioned therebetween, and an electrolyte in a case and installing a cap plate on the case. Representative examples of the electrode assembly may include a winding type electrode assembly and a stacking type electrode assembly. The electrode assembly may include uncoated portion tabs upwardly protruding and current collector members connected to the uncoated portion tabs.

The above information disclosed in this Background section is for enhancement of understanding of the background of the described technology and, therefore, it may contain information that does not form the prior art that is already known in this country to a person of ordinary skill in the art. Further prior art related to this invention can be found in EP 3 451416 A1, and EP 3043404 A1.

### SUMMARY

According to the present disclosure, a secondary battery having a high capacity using a wound or stacked electrode assembly is provided. According to another aspect of embodiments of the present disclosure, a secondary battery capable of preventing or substantially preventing an electrode assembly from being damaged by a current collector member when an external force is horizontally applied is provided. According to another aspect of embodiments of the present disclosure, a secondary battery includes a current collector member and an uncoated portion tab connected and bent to be finished using an insulating tape member and a retainer attached to the tape member, thereby preventing or substantially preventing problems, such as, for example, an electrical short circuit, due to reverting of the current collector member and the uncoated portion tab, without reverting to their initial states in which they are yet to be bent, according to the independent claim 1.

These and other aspects and features of the present disclosure will be described in or will be apparent from the following description of some example embodiments of the present disclosure.

According to one or more embodiments of the present disclosure, a secondary battery includes: an electrode assembly including an uncoated portion tab protruding by a length from a side of the electrode assembly, a current collector member connected to the uncoated portion tab and bent together with the uncoated portion tab to the side of the electrode assembly, and a tape member covering connected and bent regions of the uncoated portion tab and the current collector member.

The electrode assembly may further comprise: a pair of first regions, a pair of second regions connecting the first regions, and a pair of third regions connecting the first regions and the second regions. The first regions may form broad surfaces of the electrode assembly and the second regions may form two side surfaces of the electrode assembly.

The tape member may be attached to the uncoated portion tab or the current collector member.

The tape member may have a region attached to the uncoated portion tab or the current collector member and another region attached to the electrode assembly.

The tape member may have resistance to heat of at least 150 °C.The tape member may include polyimide, polyether ether ketone, liquid crystal polymer, or polyphenylene sulfide.

The current collector member may include a first section connected to a terminal portion, a second section bent from the first section to be in close contact with the electrode assembly, and a third section extending from the second section and connected to the uncoated portion tab.

The third section may be bent to be in close contact with the second section.

The third section may be connected to the second section or may extend from the second section.

The secondary battery may further include a retainer covering the tape member, the uncoated portion tab, and the current collector member.

The secondary battery may further include an insulation bag accommodating the electrode assembly and the retainer.

As described above, a secondary battery according to embodiments of the present disclosure employs a wound or stacked electrode assembly, wherein the uncoated portion tab faces a first direction (e.g., a horizontal direction), rather than a second direction (e.g., a vertical direction), thereby efficiently utilizing an internal space of a cell and increasing battery capacity. In addition, in a secondary battery according to embodiments of the present disclosure, since a current collector member is bent after being connected to an uncoated portion tab, an electrode assembly can be prevented or substantially prevented from being damaged when an external force is horizontally applied, thereby preventing or substantially preventing an electrical short circuit between the current collector member and the electrode assembly. Further, in a secondary battery according to embodiments of the present disclosure, after a current collector member and an uncoated portion tab are connected and bent together, the resulting structure is finished using an insulating tape member, thereby preventing or substantially preventing the bent current collector member and the bent uncoated portion tab from reverting to their initial states in which they are yet to be bent. Accordingly, it is possible to avoid problems, such as, for example, an electrical short circuit, due to reverting of the current collector member and the uncoated portion tab.

### BRIEF DESCRIPTION OF DRAWINGS

FIGS. 1A, 1B, and 1C are a perspective view, a cross-sectional view, and a partial perspective view of a secondary battery according to an embodiment of the present disclosure.
FIG. 2 is a flow diagram illustrating an assembling method of a secondary battery according to an embodiment of the present disclosure.
FIGS. 3A to 3I are perspective views illustrating a method of manufacturing a secondary battery according to an embodiment of the present disclosure.

**DESCRIPTION OF REFERENCE NUMERALS**

| | | | |
|---|---|---|---|
| 100: | Secondary battery | 110: | Electrode assembly |
| 111: | First electrode plate | 112: | Second electrode plate |
| 113: | Separator | 114: | First uncoated portion tab |
| 115: | Second uncoated portion tab | 116: | First region |
| 117A, 117B: | Second region | 118A, 118B: | Third region |
| 119A, 119B: | Tape member | 119C, 119D: | Retainer |
| 120: | Case | 130: | First terminal portion |
| 131: | First terminal pillar | 132: | First terminal plate |
| 133: | First terminal upper insulation member | 134: | First terminal seal gasket |
| 135: | First terminal lower insulation member | 140: | Second terminal portion |
| 141: | Second terminal pillar | 142: | Second terminal plate |
| 143: | Second terminal upper insulation member | 144: | Second terminal seal gasket |
| 145: | Second terminal lower insulation member | | |
| 150: | First current collector member | 151: | First section |
| 152: | Second section | 153: | Third section |
| 160: | Second current collector member | 161: | First section |
| 162: | Second section | 163: | Third section |
| 170: | Cap assembly | 171: | Cap plate |
| 172: | Electrolyte injection unit | 173: | Seal plug |
| 174: | Vent hole | 175: | Vent plate |

### DETAILED DESCRIPTION

Herein, some example embodiments of the present disclosure will be described in further detail. The subject matter of the present disclosure, however, may be embodied in many different forms and should not be construed as being limited to the example (or exemplary) embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

Unless otherwise defined, all terms (including technical and scientific terms) used herein have the same meaning as commonly understood by one of ordinary skill in the art to which this disclosure belongs. It is to be further understood that terms, such as those defined in commonly used dictionaries, should be interpreted as having a meaning that is consistent with their meaning in the context of the relevant art and are not to be interpreted in an idealized or overly formal sense unless expressly so defined herein.

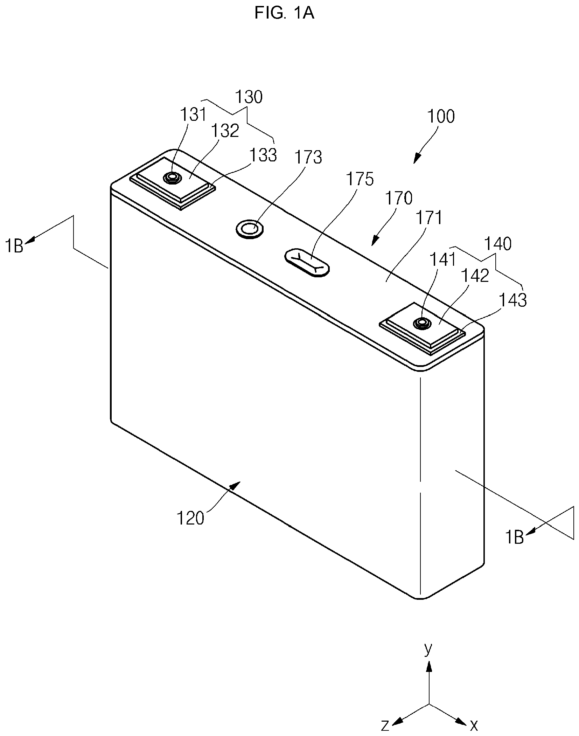

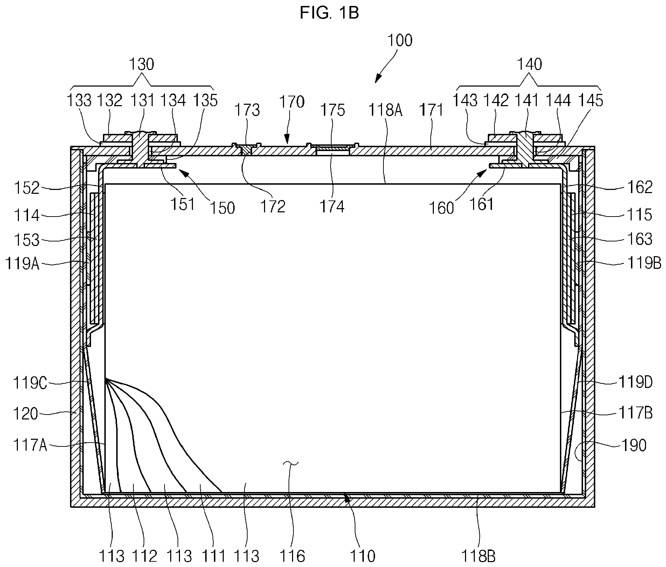

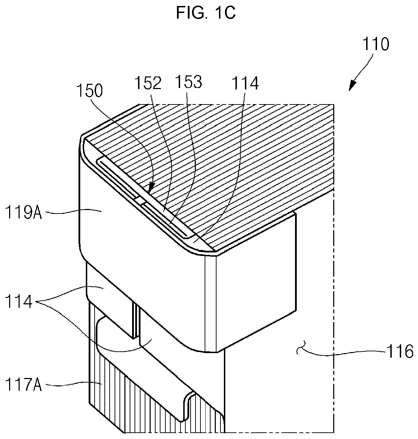

Referring to FIGS. 1A, 1B, and 1C, a perspective view, a cross-sectional view, and a partial perspective view of a secondary battery according to an embodiment of the present disclosure are illustrated. FIG. 1B is a cross-sectional view taken along the line 1B-1B of FIG. 1A.

As shown in FIGS. 1A, 1B, and 1C, a secondary battery 100 according to an embodiment of the present disclosure may include an electrode assembly 110, a case 120 accommodating the electrode assembly 110, a first terminal portion 130 electrically connected to a first side of the electrode assembly 110, a second terminal portion 140 electrically connected to a second side of the electrode assembly 110, a first current collector member 150 positioned between the first side of the electrode assembly 110 and the first terminal portion 130, a second current collector member 160 positioned between the second side of the electrode assembly 110 and the second terminal portion 140, and a cap assembly 170 coupled to an opening of the case 120.

In some embodiments, the secondary battery 100 may further include first and second tape members 119A and 119B attached to the first side and the second side of the electrode assembly 110, respectively. In some embodiments, the secondary battery 100 may further include first and second retainers 119C and 119D covering the first and second tape members 119A and 119B, respectively. In some embodiments, the secondary battery 100 may further include an insulation bag 190 covering the electrode assembly 110.

The secondary battery 100 according to an embodiment of the present disclosure is a lithium ion secondary battery, which will be described by way of example with regard to a prismatic type, and the electrode assembly 110 will be described by way of example with regard to a prismatic type. However, embodiments of the present disclosure are not limited thereto, and, in an embodiment, the electrode assembly 110 may be a stacked electrode assembly. In addition, embodiments of the present disclosure may be applied to any of various types of batteries, including lithium polymer batteries, lithium solid batteries, and so on.

The electrode assembly 110 may include a first electrode plate 111, a second electrode plate 112, and a separator 113 positioned between the first and second electrode plates 111 and 112. In some embodiments, the electrode assembly 110 may have a shape of a rectangular parallelepiped in which the first electrode plate 111, the separator 113, and the second electrode plate 112 are stacked in that order and then wound. For example, the electrode assembly 110 may be wound in a first direction (e.g., a horizontal direction). In addition, in some embodiments, the electrode assembly 110 may have a shape of a rectangular parallelepiped in which the first electrode plate 111, the separator 113, and the second electrode plate 112 are stacked in that order, but are not wound. In an embodiment, when the stacked electrode assembly 110 having the shape of a rectangular parallelepiped is coupled to the case 120 having an approximately parallelepiped opening, there may be little gap between the electrode assembly 110 and the case 120, thereby considerably increasing battery capacity.

In an embodiment, the electrode assembly 110 may include a pair of first regions 116, a pair of second regions 117A and 117B connecting the first regions 116, and a pair of third regions 118A and 118B connecting the first regions 116 and the second regions 117A and 117B. The electrode assembly 110 may include one or more electrode assemblies. Here, an area occupied by the pair of first regions 116 may be larger than that occupied by the pair of second regions 117A and 117B. In addition, an area occupied by the pair of third regions 118A and 118B may be larger or smaller than that occupied by the pair of second regions 117A and 117B.

In an embodiment, the first electrode plate 111 may operate as a negative electrode, and the second electrode plate 112 may operate as a positive electrode. Conversely, the first electrode plate 111 may operate as a positive electrode, and the second electrode plate 112 may operate as a negative electrode. However, for brevity and clarity, the present disclosure will be described with regard to an example in which the first electrode plate 111 operates as a negative electrode and the second electrode plate 112 operates as a positive electrode.

The first electrode plate 111 may be formed by coating a first electrode active material, such as graphite or carbon, on a first electrode current collector formed of a metal foil made of copper, a copper alloy, nickel, or a nickel alloy, for example, and may include a first uncoated portion tab 114 on which the first electrode active material is not coated. The first uncoated portion tab 114 may function as a path for a flow of current between the first electrode plate 111 and the first terminal portion 130.

In an embodiment, as shown in FIG. 1C, the first uncoated portion tab 114 may protrude or extend by a length (e.g., a predetermined length) from a side of the electrode assembly 110 and may be bent in an approximately L-shaped configuration. With this configuration, the first uncoated portion tab 114 may be connected to the first current collector member 150, which will be described later. In some embodiments, the first uncoated portion tab 114 of the electrode assembly 110 is planar in its original configuration, but may then be bent in the approximately L-shaped configuration after being connected to the first current collector member 150.

The second electrode plate 112 may be formed by coating a second electrode active material, such as a transition metal oxide, on a second electrode current collector formed of a metal foil made of aluminum or an aluminum alloy, for example, and may include a second uncoated portion tab 115 on which the second electrode active material is not coated. The second uncoated portion tab 115 may function as a path for a flow of current between the second electrode plate 112 and the second terminal portion 140.

In an embodiment, the second uncoated portion tab 115 may protrude or extend by a length (e.g., a predetermined length) from the second side of the electrode assembly 110 and may be bent in an approximately L-shaped configuration. With this configuration, the second uncoated portion tab 115 may be connected to the second current collector member 160, which will be described later. In some embodiments, the second uncoated portion tab 115 of the electrode assembly 110 is planar in its original configuration, but may then be bent in the approximately L-shaped configuration after being connected to the second current collector member 160.

In an embodiment, the first uncoated portion tab 114 and the second uncoated portion tab 115 may be configured such that they protrude and extend by a length (e.g., a predetermined length) from the electrode assembly 110 in horizontally opposite directions and are then bent.

The separator 113 may be positioned between the first electrode plate 111 and the second electrode plate 112 to prevent or substantially prevent an electrical short circuit and to allow for movement of lithium ions. In an embodiment, the separator 113 may be made of polyethylene, polypropylene, or a composite film of polyethylene and polypropylene. However, embodiments of the present disclosure are not limited to the above-described materials of the separator 113. In some embodiments, the separator 113 may be replaced by a solid electrolyte.

The electrode assembly 110 may be received in the case 120 along with, for example, an electrolyte, but is not limited thereto. In an embodiment, the electrolyte may include a lithium salt, such as LiPF₆ and/or LiBF₄, dissolved in an organic solvent, such as EC (ethylene carbonate), PC (propylene carbonate), DEC (diethyl carbonate), EMC (ethyl methyl carbonate), or DMC (dimethyl carbonate). In addition, the electrolyte may be in a liquid phase, a solid phase, or a gel phase.

In an embodiment, the case 120 may have a shape of an approximately rectangular parallelepiped having a hollow cavity with a top opening. Thus, the electrode assembly 110 may be inserted into the inside of the case 120 through the opening.

The first terminal portion 130 may be electrically connected to the first uncoated portion tab 114 of the electrode assembly 110 by the first current collector member 150. In an embodiment, the first terminal portion 130 may include a first terminal pillar 131 penetrating a cap plate 171 of the cap assembly 170, and the first current collector member 150 may be electrically connected to the first terminal pillar 131 in the case 120. In addition, the first uncoated portion tab 114 of the electrode assembly 110 may be connected to the first current collector member 150.

In an embodiment, the first current collector member 150 may be made of a same material as the first uncoated portion tab 114. In some embodiments, the first uncoated portion tab 114 is made of a copper- or nickel-based material, and the first current collector member 150 may also be made of a copper-or nickel-based material. Therefore, the first uncoated portion tab 114 may be easily welded to the first current collector member 150.

In some embodiments, the first current collector member 150 may be easily bendable. In some embodiments, since the first current collector member 150 is bent in approximately L- and/or U-shaped configurations in the course of manufacturing the secondary battery 100, the first current collector member 150 may have ductility.

The second terminal portion 140 may be electrically connected to the second uncoated portion tab 115 of the electrode assembly 110 by the second current collector member 160. In an embodiment, the second terminal portion 140 may include a second terminal pillar 141 penetrating the cap plate 171 of the cap assembly 170, and the second current collector member 160 may be electrically connected to the second terminal pillar 141 in the case 120. In addition, the second uncoated portion tab 115 of the electrode assembly 110 may be connected to the second current collector member 160.

In an embodiment, the second current collector member 160 may be made of a same material as the second uncoated portion tab 115. In some embodiments, the second uncoated portion tab 115 is made of an aluminum-based material, and the second current collector member 160 may also be made of an aluminum-based material. Therefore, the second uncoated portion tab 115 may be easily welded to the second current collector member 160.

In some embodiments, the second current collector member 160 may be easily bendable. In some embodiments, since the second current collector member 160 is bent in approximately L- and/or U-shaped configurations in the course of manufacturing the secondary battery 100, the second current collector member 160 may have ductility.

The cap assembly 170 may include the cap plate 171 in a shape of a planar panel. In some embodiments, the cap plate 171 may be formed of a thin panel and may be coupled to the opening of the case 120 to close the opening. In an embodiment, the cap plate 171 may include an electrolyte injection unit 172 for injecting an electrolyte into the closed case 120. After the injection of the electrolyte, the electrolyte injection unit 172 may be closed by a seal plug 173. In an embodiment, the cap plate 171 may include a vent hole 174 and a vent plate 175 installed in the vent hole 174 and configured to rupture when the internal pressure of the closed case 120 exceeds a certain pressure (e.g., a preset pressure).

In an embodiment, the first terminal portion 130 may be positioned on the cap plate 171 and may include a first terminal plate 132 (made of, for example, aluminum) coupled to the first terminal pillar 131, a first terminal upper insulation member 133 installed between the first terminal plate 132 and the cap plate 171, a first terminal seal gasket 134 positioned between the first terminal pillar 131 and the cap plate 171, and a first terminal lower insulation member 135 installed between the first current collector member 150 connected to the first terminal pillar 131 and the cap plate 171.

In an embodiment, the second terminal portion 140 may be positioned on the cap plate 171 and may include a second terminal plate 142 (made of, for example, aluminum) coupled to the second terminal pillar 141, a second terminal upper insulation member 143 installed between the second terminal plate 142 and the cap plate 171, a second terminal seal gasket 144 positioned between the second terminal pillar 141 and the cap plate 171, and a second terminal lower insulation member 145 installed between the second current collector member 160 connected to the second terminal pillar 141 and the cap plate 171.

In an embodiment, the second terminal upper insulation member 143 may be replaced by a high-resistance conductor. In this case, the cap plate 171 and the case 120 may have a same polarity as the second terminal portion 140. In some embodiments, the secondary battery 100 may include the case 120 and the cap plate 171 having a positive polarity.

The first current collector member 150 may be positioned at a side of the electrode assembly 110 and may have a particular structure to be efficiently connected to the first uncoated portion tab 114. In some embodiments, the first current collector member 150 may include a first section 151 extending to be substantially parallel with a length direction of the third region 118A of the electrode assembly 110 and/or a length direction of the cap plate 171, a second section 152 vertically bent from the first section 151 and extending to be substantially parallel with a length direction of the second region 117A of the electrode assembly 110, and a third section 153 extending from the second section 152 and bent toward the second region 117A after being connected to the first uncoated portion tab 114.

Here, the first section 151 may be coupled to the first terminal pillar 131. In an embodiment, after the third section 153 is connected (e.g., welded) to the first uncoated portion tab 114, the third section 153 and the first uncoated portion tab 114 may be bent together toward the second region 117A in an approximately L-shaped configuration. In some embodiments, the first and second sections 151 and 152 may be integrally formed and the separately provided third section 153 may be connected to the second section 152. In some embodiments, the first, second, and third sections 151, 152, and 153 may be integrally formed together.

The first tape member 119A may be attached to the first uncoated portion tab 114 connected to the third section 153 of the first current collector member 150 and then bent. In some embodiments, the first tape member 119A may be attached to the first uncoated portion tab 114. In some embodiments, a region of the first tape member 119A may be attached to the first uncoated portion tab 114, and other regions of the first tape member 119A may be attached to the first regions 116 of the electrode assembly 110. Therefore, the third section 153 and the first uncoated portion tab 114 may not revert to their initial states in which they are yet to be bent. In an embodiment, the first retainer 119C having an insulating property may cover the first uncoated portion tab 114, the first tape member 119A, and the second region 117A.

The second current collector member 160 may be positioned at the other side of the electrode assembly 110 and may have a particular structure to be efficiently connected to the second uncoated portion tab 115. In some embodiments, the second current collector member 160 may include a first section 161 extending to be substantially parallel with the length direction of the third region 118A of the electrode assembly 110 and/or the length direction of the cap plate 171, a second section 162 vertically bent from the first section 161 and extending to be substantially parallel with the length direction of the second region 117B of the electrode assembly 110, and a third section 163 extending from the second section 162 and bent toward the second region 117B after being connected to the second uncoated portion tab 115.

Here, the first section 161 may be coupled to the second terminal pillar 141. In an embodiment, after the third section 163 is connected (e.g., welded) to the second uncoated portion tab 115, the third section 163 and the second uncoated portion tab 115 may be bent together toward the second region 117B in an approximately L-shaped configuration. In some embodiments, the first and second sections 161 and 162 may be integrally formed and the separately provided third section 163 may be connected to the second section 162. In some embodiments, the first, second, and third sections 161, 162, and 163 may be integrally formed together.

The second tape member 119B may be attached to the second uncoated portion tab 115 connected to the third section 163 of the second current collector member 160 and then bent. In some embodiments, the second tape member 119B may be attached to the second uncoated portion tab 115. In some embodiments, a region of the second tape member 119B may be attached to the second uncoated portion tab 115, and other regions of the second tape member 119B may be attached to the first regions 116 of the electrode assembly 110. Therefore, the third section 163 and the second uncoated portion tab 115 may not revert to their initial states in which they are yet to be bent. In an embodiment, the second retainer 119D having an insulating property may cover the second uncoated portion tab 115, the second tape member 119B, and the second region 117B.

The first and second tape members 119A and 119B may be resistant to heat higher than approximately 150 °C, and, in an embodiment, approximately 200 °C, preferably higher than approximately 200°C, and, in an embodiment, approximately 250 °C, preferably higher than approximately 250°C. In some examples, the melting points of the first and second tape members 119A and 119B may be approximately 150 °C, preferably approximately 200 °C, more preferably approximately 250° C or more. In some examples, the melting points of the first and second tape members 119A and 119B may be approximately 150 °C to 200°C, approximately 200 °C to 250° C, or approximately 250° C or more.Therefore, even while the secondary battery 100 operates at high temperature, the first and second tape members 119A and 119B may not be melted and the uncoated portion tabs 114 and 115 and the current collector members 150 and 160 connected thereto may be maintained at bent states. In some embodiments, the first and second tape members 119A and 119B may include, but are not limited to, polyimide, polyether ether ketone, liquid crystal polymer, or polyphenylene sulfide.

The insulation bag 180 may receive the electrode assembly 110 and the first and second retainers 119C and 119D. In some embodiments, the insulation bag 180 may be positioned between each of the electrode assembly 110, the first and second retainers 119C and 119D, and the case 120. Therefore, the insulation bag 180 may prevent or substantially prevent an electrical short circuit between the electrode assembly 110 and the case 120.

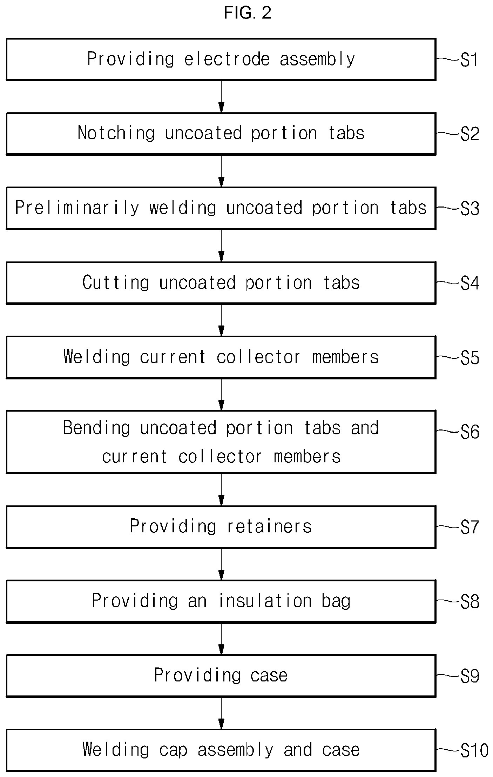

FIG. 2 is a flow diagram illustrating an assembling method of a secondary battery according to an embodiment of the present disclosure.

As shown in FIG. 2, an assembling method of the secondary battery 100 according to an embodiment of the present disclosure may include an electrode assembly preparing or providing (S1), an uncoated portion tab notching (S2), an uncoated portion tab preliminary welding (S3), an uncoated portion tab cutting (S4), a current collector member welding (S5), an uncoated portion tab and current collector member bending (S6), a retainer providing (S7), an insulation bag providing (S8), a case providing (S9), and a cap assembly and case welding (S10).

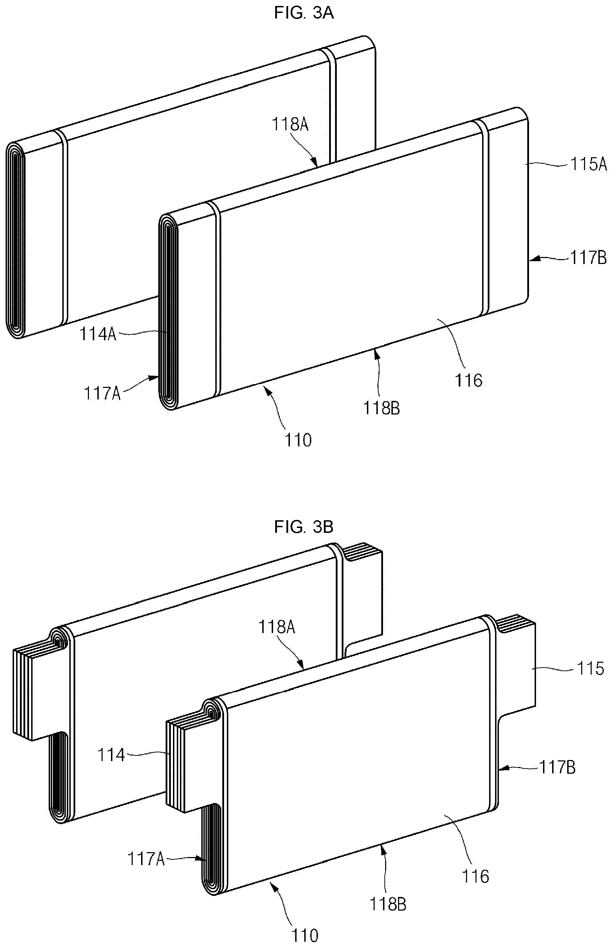

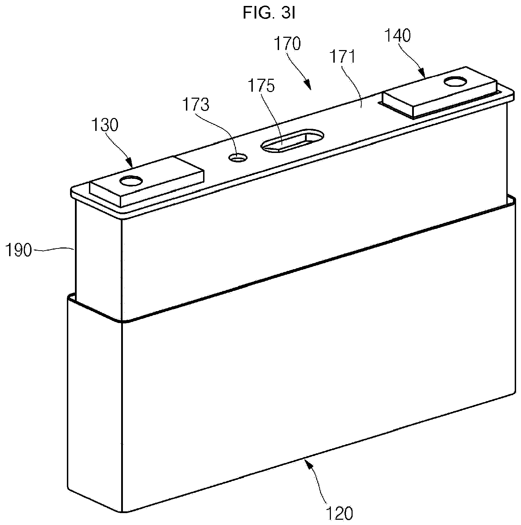

FIGS. 3A to 3I are perspective views illustrating a method of manufacturing a secondary battery 100 according to an embodiment of the present disclosure. Here, a wound electrode assembly 110, by way of example, will be described with reference to FIGS. 3A to 3I together with FIG. 2, but a stacked electrode assembly may also be applied to embodiments of the present disclosure.

As shown in FIG. 3A, in the electrode assembly preparing or providing (S1), one or more electrode assemblies 110, each wound approximately in a first direction (e.g., a horizontal direction), may be prepared or provided.

In some embodiments, a first uncoated portion 114A may protrude or extend to one side of the first direction, and a second uncoated portion 115A may protrude or extend to the other side of the first direction. In some embodiments, the electrode assembly 110 may include a pair of first regions 116 facing each other (only a front surface is shown in the drawing), a pair of second regions 117A and 117B connecting the pair of first regions 116 and facing each other, and a pair of third regions 118A and 118B connecting the pair of first regions 116 and the pair of second regions 117A and 117B. In some embodiments, lengths (e.g., heights) of the first and second uncoated portions 114A and 115A may be equal to those (e.g., heights) of the second regions 117A and 117B.

As shown in FIG. 3B, in an embodiment, in the uncoated portion tab notching (S2), regions other than some regions of the first and second uncoated portions 114A and 115A may be removed.

In some embodiments, notching may be performed by laser or pressing. Accordingly, the first and second uncoated portion tabs 114 and 115 protruding or extending from the second regions 117A and 117B may remain, respectively.

In some embodiments, the first and second uncoated portion tabs 114 and 115 may be located at upper regions of the second regions 117A and 117B, respectively. In some embodiments, the first and second uncoated portion tabs 114 and 115 may be generally located at central or lower regions of the second regions 117A and 117B, respectively. In addition, in some embodiments, as a result of the notching, the lengths (e.g., heights) of the first and second uncoated portion tabs 114 and 115 may be smaller than those (e.g., heights) of the second regions 117A and 117B.

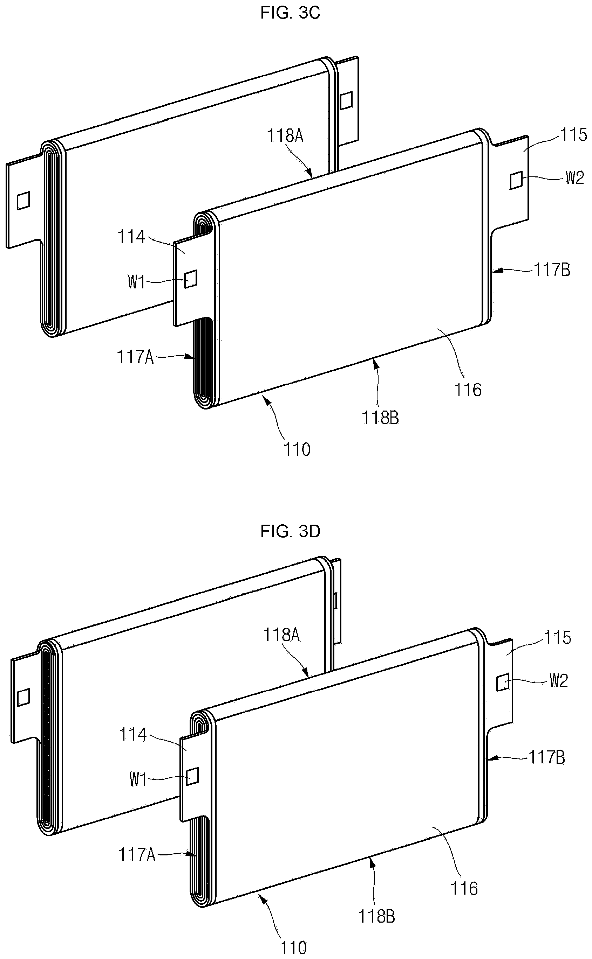

As shown in FIG. 3C, in the uncoated portion tab preliminary welding (S3), the first and second uncoated portion tabs 114 and 115 may be preliminarily welded (W1 and W2) to be connected to each other.

The preliminary welding (W1 and W2) may reduce thicknesses of the first and second uncoated portion tabs 114 and 115. For example, the first and second uncoated portion tabs 114 and 115 may be spaced apart from each other. However, as a result of the preliminary welding (W1 and W2), the first and second uncoated portion tabs 114 and 115 may be brought into close contact with each other to then be electrically connected to each other, thereby reducing the thicknesses of the first and second uncoated portion tabs 114 and 115.

As shown in FIG. 3D, in the uncoated portion tab cutting (S4), some regions of the first and second uncoated portion tabs 114 and 115 may be cut to be removed.

In some embodiments, the cutting may be performed by laser or pressing. Accordingly, widths of the first and second uncoated portion tabs 114 and 115 may be further reduced. In an embodiment, since volumes occupied by the first and second uncoated portion tabs 114 and 115 in the case 120 are reduced by the notching and cutting steps, the electrode assembly 110 having a further increased capacity may be accommodated in the case 120.

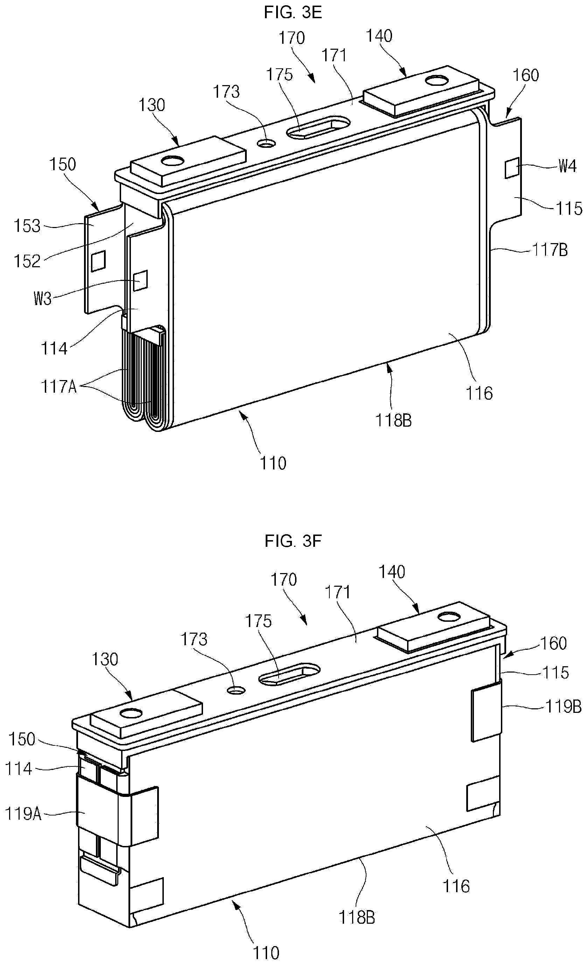

As shown in FIG. 3E, in the current collector member welding (S5), the first and second current collector portions 150 and 160 may be electrically welded to the first and second uncoated portion tabs 114 and 115, respectively. Here, reference is also made to FIGS. 1B and 1C together.

In some embodiments, the cap assembly 170 may be prepared, the cap assembly 170 having the first and second terminal portions 130 and 140 coupled to the cap plate 171 and the first and second current collector portions 150 and 160 electrically connected to the first and second terminal portions 130 and 140, and the first and second current collector portions 150 and 160 in the cap assembly 170 may be welded to the first and second uncoated portion tabs 114 and 115, respectively. In an embodiment, laser welding, ultrasonic welding, or electrical resistance welding may be employed.

In some embodiments, the first current collector member 150 may include a first section 151 (see FIG. 1B) connected to the first terminal portion 130, a second section 152 bent from the first section 151 and brought into close contact with the second region 117A of the electrode assembly 110, and a pair of third sections 153 (see FIG. 1B) bent from opposite sides of the second section 152 and outwardly extending. In some embodiments, a front one of the third sections 153 may be welded (W3) to the first uncoated portion tab 114 of the front electrode assembly 110, and a rear one of the third sections 153 may be welded (W3) to the first uncoated portion tab 114 of the rear electrode assembly 110.

In some embodiments, the first uncoated portion tabs 114 of the front electrode assembly 110 and the rear electrode assembly 110 may be welded (W3) to the outer surfaces in the pair of third sections 153, respectively. In other words, the first uncoated portion tabs 114 may be connected to the outer surfaces of the third sections 153.

In addition, in some embodiments, the first uncoated portion tabs 114 of the front electrode assembly 110 and the rear electrode assembly 110 may be welded (W3) to the inner surfaces in the pair of third sections 153, respectively. In other words, the first uncoated portion tab 114 may be connected to the inner surfaces of the third sections 153. In an embodiment, a region of the second section 152 of the first current collector member 150 may be removed so as to prevent or substantially prevent the region from interfering or overlapping with the first uncoated portion tab 114 of the electrode assembly 110.

In some embodiments, the second current collector member 160 may include a first section 161 (see FIG. 1B) connected to the second terminal portion 140, a second section 162 bent from the first section 161 and brought into close contact with the second region 117B of the electrode assembly 110, and a pair of third sections 163 (see FIG. 1B) bent from opposite sides of the second section 162 and outwardly extending. In some embodiments, a front one of the third sections 163 may be welded (W4) to the second uncoated portion tab 115 of the front electrode assembly 110, and a rear one of the third sections 163 may be welded (W4) to the second uncoated portion tab 115 of the rear electrode assembly 110.

In some embodiments, the second uncoated portion tabs 115 of the front electrode assembly 110 and the rear electrode assembly 110 may be welded (W4) to the outer surfaces in the pair of third sections 163, respectively. In other words, the second uncoated portion tabs 115 may be connected to the outer surfaces of the third sections 163.

In some embodiments, the second uncoated portion tabs 115 of the front electrode assembly 110 and the rear electrode assembly 110 may be welded (W4) to the inner surfaces in the pair of third sections 163, respectively. In other words, the second uncoated portion tabs 115 may be connected to the inner surfaces of the third sections 163. In an embodiment, a region of the second section 162 of the second current collector member 160 may be removed so as to prevent or substantially prevent the region from interfering or overlapping with the second uncoated portion tab 115 of the electrode assembly 110.

In such a way, the third section 153 of the first current collector member 150 and the first uncoated portion tab 114 of the electrode assembly 110 welded thereto, may be provided, and the third section 163 of the second current collector member 160 and the second uncoated portion tab 115 of the electrode assembly 110 welded thereto, may be provided. Here, the third section 153 and the first uncoated portion tab 114 may be configured to outwardly protrude and extend from the second region 117A of the electrode assembly 110. In addition, the third section 163 and the second uncoated portion tab 115 may be configured to outwardly protrude and extend from the second region 117B of the electrode assembly 110.

As shown in FIG. 3F, in the uncoated portion tab and current collector member bending (S6), the uncoated portion tabs 114 and 115 and the current collector members 150 and 160 may be bent together to then be brought into close contact with the second regions 117A and 117B of the electrode assembly 110, respectively.

In some embodiments, the first uncoated portion tab 114 and the third section 153 of the first current collector member 150 may be bent together to then be brought into close contact with the second region 117A of the electrode assembly 110, and, in an embodiment, with the second section 152 of the first current collector member 150. In some embodiments, the third section 153 of the first current collector member 150 may be directly brought into close contact with the second section 152. Accordingly, in an embodiment, the first uncoated portion tab 114 may be exposed at an outermost portion.

In some embodiments, when the first uncoated portion tab 114 is connected to the interior of the third section 153, the first uncoated portion tab 114 may be directly brought into close contact with the second region 117A of the electrode assembly 110. Accordingly, in an embodiment, the third section 153 may be exposed at an outermost portion.

In some embodiments, the second uncoated portion tab 115 and the third section 163 of the second current collector member 160 may be bent together to then be brought into close contact with the second region 117B of the electrode assembly 110, and, in an embodiment, with the second section 162 of the second current collector member 160. In some embodiments, the third section 163 of the second current collector member 160 may be directly brought into close contact with the second section 162. Accordingly, in an embodiment, the second uncoated portion tab 115 may be exposed at an outermost portion.

In some embodiments, when the second uncoated portion tab 115 is connected to the interior of the third section 163, the second uncoated portion tab 115 may be directly brought into close contact with the second region 117B of the electrode assembly 110. Accordingly, in an embodiment, the third section 163 may be exposed to the outermost portion.

The tape members 119A and 119B may be attached to prevent or substantially prevent the uncoated portion tabs 114 and 115 and the current collector members 150 and 160 from reverting to their initial states after the uncoated portion tabs 114 and 115 and the current collector members 150 and 160 are bent.

In some embodiments, the first tape member 119A may be adhered to the first uncoated portion tab 114 bent in the approximately L-shaped configuration. In addition, in some embodiments, a first side region of the first tape member 119A may be adhered to the bent first uncoated portion tab 114, and a second side region of the first tape member 119A may be adhered to the first region 116 of the electrode assembly 110. In some embodiments, the first tape member 119A may be adhered to the first uncoated portion tab 114 and the pair of first regions 116 (only a front one of the pair of first regions is shown in the drawing) provided in the electrode assembly 110 in an approximately U-shaped configuration.

In some embodiments, when the third section 153 of the first current collector member 150 is exposed at an outermost portion, the first side region of the first tape member 119A may be directly adhered to the third section 153, and the second side region of the first tape member 119A may be adhered to the first region 116 of the electrode assembly 110.

In addition, in some embodiments, the second tape member 119B may be adhered to the bent second uncoated portion tab 115. In addition, in some embodiments, a first side region of the second tape member 119B may be adhered to the bent second uncoated portion tab 115 and a second side region of the second tape member 119B may be adhered to the first region 116 of the electrode assembly 110. In some embodiments, the second tape member 119B may be adhered to the second uncoated portion tab 115 and the pair of first regions 116 (only the front one of the pair of first regions is shown in the drawing) provided in the electrode assembly 110 in an approximately U-shaped configuration.

In some embodiments, when the third section 163 of the second current collector member 160 is exposed at an outermost portion, the first side region of the second tape member 119B may be directly adhered to the third section 163, and the second side region of the second tape member 119B may be adhered to the first region 116 of the electrode assembly 110.

In such a way, the bent uncoated portion tabs 114 and 115 and the bent current collector members 150 and 160 may be constrained in their bent states by the tape members 119A and 119B without reverting to their original states, thereby preventing or substantially preventing faults from being generated due to bending of the uncoated portion tabs 114 and 115 and the current collector members 150 and 160.

Of course, it will be appreciated by a person skilled in the art that, in some embodiments, various insulation members, other than the first and second tape members 119A and 119B, can be adhered to the second regions 117A and 117B, the first regions 116, and/or the third regions 118A and 118B of the electrode assembly 110.

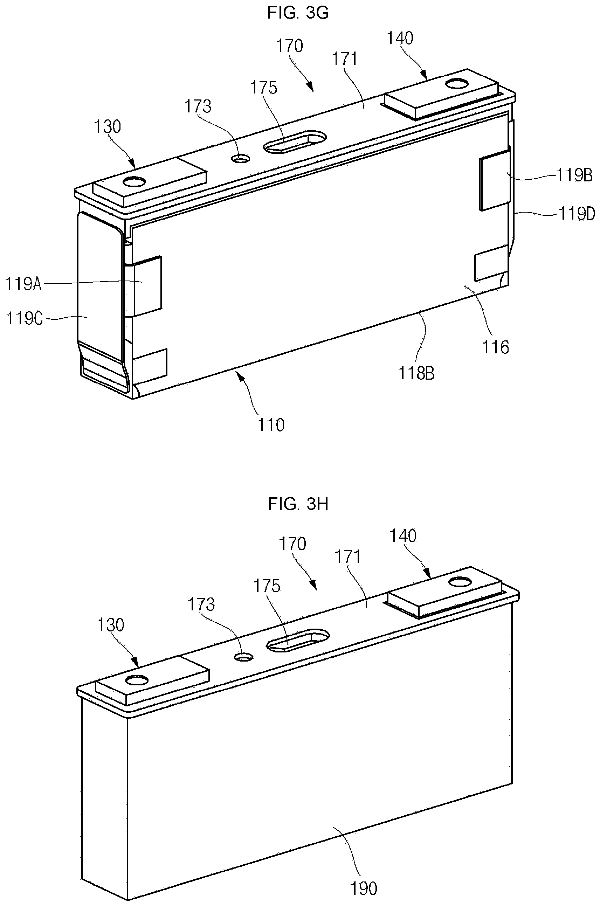

As shown in FIG. 3G, in the retainer providing (S7), insulating retainers 119C and 119D may be attached approximately to the second regions 117A and 117B of the electrode assembly 110.

According to the invention, the first retainer 119C is attached to the bent first uncoated portion tab 114, the third section 153 of the bent first current collector member 150, the first tape member 119A, and the second region 117A of the electrode assembly 110. In addition, in some embodiments, the second retainer 119D is attached to the bent second uncoated portion tab 115, the third section 163 of the second current collector member 160, the second tape member 119B, and the second region 117B of the electrode assembly 110. The first and second retainers 119C and 119D may prevent or substantially prevent the second regions 117A and 117B of the electrode assembly 110, which face away from each other, from directly colliding with or contacting sidewalls of the case 120.

As shown in FIG. 3H, in the insulation bag providing (S8), the electrode assembly 110 having the aforementioned configuration may be accommodated in the insulation bag 190.

In some embodiments, the second regions 117A and 117B of the electrode assembly 110, which face away from each other, and structures located around the electrode assembly 110, the first regions 116 of the electrode assembly 110, which face away from each other, and the third region 118B of the electrode assembly 110, may be accommodated in the insulation bag 190. Accordingly, the electrode assembly 110, the structures located around the electrode assembly 110, and the case 120, may be electrically insulated from one another.

As shown in FIG. 31, in the case providing (S9), the electrode assembly 110 covered by the insulation bag 190 may be coupled to or inserted into the case 120 having an approximately parallelepiped top opening.

In the cap assembly and case welding (S10), a periphery of the cap assembly 170 may be welded to the case 120, thereby integrally forming the cap assembly 170 and the case 120 in mechanical/physical/electrical manners.

In some embodiments, the periphery of the cap plate 171 may be welded to the case 120. The welding may be performed by, for example, but not limited to, laser beams. Accordingly, when the cap assembly 170 is charged with, for example, positive polarity, the case 120 may also be charged with positive polarity. In some embodiments, after the welding, an electrolyte may be injected through an injection hole. Of course, after the injecting, the injection hole may be closed by a seal plug 173.

As described above, according to embodiments of the present disclosure, the wound or stacked electrode assembly may be used, and uncoated portion tabs may be located at second regions opposite to each other in a first direction (e.g., a horizontal direction), thereby efficiently utilizing an internal space of a cell and thereby increasing battery capacity.

In addition, according to embodiments of the present disclosure, since current collector members are connected to the uncoated portion tabs and then folded to the second regions, the electrode assembly may not be damaged by the current collector members even when an external force is horizontally applied, thereby preventing or substantially preventing electrical short circuits between the current collector members and the electrode assembly.

In addition, according to embodiments of the present disclosure, since insulating tape members are further adhered to the bent current collector members and the bent uncoated portion tabs, the bent current collector members and the bent uncoated portion tabs may be firmly brought into close contact with the second regions of the electrode assembly without reverting to their initial states in which they are yet to be bent. Accordingly, problems, such as, for example, an electrical short circuit, encountered by the bent current collector members and the bent uncoated portion tabs in the course of manufacturing or using batteries, may be prevented or substantially prevented.

While some example embodiments have been described to practice the secondary battery of the present disclosure, it will be understood by those of ordinary skill in the art that various changes in form and details may be made therein without departing from the scope of the present disclosure as set forth by the following claims.

## Claims

1. A secondary battery comprising:
an electrode assembly (110) comprising an uncoated portion tab (114, 115);
a current collector member (150, 160) connected to the uncoated portion tab (114, 115) protruding by a length from a side of the electrode assembly (110) and bent together with the uncoated portion tab (114, 115) to the side of the electrode assembly (110); and
a tape member (119A, 119B) covering connected and bent regions of the uncoated portion tab (114, 115) and the current collector member (150, 160), and
a retainer (119C, 119D attached to the tape member (119A, 119B) and a region (117) of the electrode assembly (110) facing the side of the electrode assembly (110), the retainer (119C, 119D further being attached to the bent region of the current collector member (150, 160) or the bent region of the uncoated portion tab (114, 115).

2. The secondary battery of claim 1, wherein the tape member (119A, 119B) is attached to the uncoated portion tab (114, 115).

3. The secondary battery of claim 1 or 2, wherein the tape member (119A, 119B) is attached to the current collector member (150, 160).

4. The secondary battery of any of claims 1 or 2, wherein the tape member (119A, 119B) comprises a region attached to the uncoated portion tab (114, 115) and another region attached to the electrode assembly (110).

5. The secondary battery of any of claims 1 or 3, wherein the tape member (119A, 119B) comprises a region attached to the current collector member (150) and another region attached to the electrode assembly (110).

6. The secondary battery of any of claims 1 to 5, wherein the tape member (119A, 119B) has resistance to heat of at least 150 °C, preferably at least 200°C, more preferably at least 250°C

7. The secondary battery of any of claims 1 to 6, wherein the tape member (119A, 119B) comprises polyimide, polyether ether ketone, liquid crystal polymer, or polyphenylene sulfide.

8. The secondary battery of any of claims 1 to 7, wherein the current collector member (150) comprises a first section (151, 161) connected to a terminal portion (130, 140) of the second battery, a second section (152, 162) bent from the first section (151) to be in contact with the electrode assembly (110), and a third section (153, 163) extending from the second section (152, 162) and connected to the uncoated portion tab (114, 115).

9. The secondary battery of claim 8, wherein the third section (153, 163) is bent to be in contact with the second section (152, 162).

10. The secondary battery of claim 8 or 9, wherein the third section (153, 163) is connected to the second section (152, 162).

11. The secondary battery of any of claims 8 to 10, wherein the third section (153, 163) extends from the second section (152, 162).

12. The secondary battery of claim 1, further comprising an insulation bag (190) accommodating the electrode assembly (110) and the retainer (119C, 119D).

## Patentansprüche

1. Eine Sekundärbatterie, bestehend aus:
eine Elektrodenanordnung (110), die einen unbeschichteten Teilstreifen (114, 115) umfasst;
ein Stromkollektorelement (150, 160), das mit dem Teilstreifen (114, 115) des unbeschichteten Abschnitts verbunden ist, die über eine Länge von einer Seite der Elektrodenanordnung (110) vorsteht und zusammen mit dem Teilstreifen (114, 115) des unbeschichteten Abschnitts zu der Seite der Elektrodenanordnung (110) gebogen ist; und
ein Bandelement (119A, 119B), das verbundene und gebogene Bereiche der unbeschichteten Teilstreifen (114, 115) und des Stromkollektorelements (150, 160) abdeckt, und
einen Halter (119C, 119D), der an dem Bandelement (119A, 119B) und einem Bereich (117) der Elektrodenbaugruppe (110) befestigt ist, der der Seite der Elektrodenbaugruppe (110) zugewandt ist, wobei der Halter (119C, 119D) ferner an dem gebogenen Bereich des Stromkollektorelements (150, 160) oder dem gebogenen Bereich der Lasche des unbeschichteten Teilstreifens (114, 115) befestigt ist.

2. Sekundärbatterie nach Anspruch 1, wobei das Bandelement (119A, 119B) an dem Teilstreifen (114, 115) des unbeschichteten Teils befestigt ist.

3. Sekundärbatterie nach Anspruch 1 oder 2, wobei das Bandelement (119A, 119B) an dem Stromkollektorelement (150, 160) befestigt ist.

4. Sekundärbatterie nach einem der Ansprüche 1 oder 2, wobei das Bandelement (119A, 119B) einen Bereich, der an dem Teilstreifen (114, 115) des unbeschichteten Abschnitts befestigt ist, und einen anderen Bereich, der an der Elektrodenanordnung (110) befestigt ist, umfasst.

5. Sekundärbatterie nach einem der Ansprüche 1 oder 3, wobei das Bandelement (119A, 119B) einen an dem Stromkollektorelement (150) befestigten Bereich und einen anderen an der Elektrodenanordnung (110) befestigten Bereich aufweist.

6. Sekundärbatterie nach einem der Ansprüche 1 bis 5, wobei das Bandelement (119A, 119B) eine Wärmebeständigkeit von mindestens 150 °C, vorzugsweise von mindestens 200 °C, noch bevorzugter von mindestens 250 °C aufweist.

7. Sekundärbatterie nach einem der Ansprüche 1 bis 6, wobei das Bandelement (119A, 119B) Polyimid, Polyetheretherketon, Flüssigkristallpolymer oder Polyphenylensulfid umfasst.

8. Sekundärbatterie nach einem der Ansprüche 1 bis 7, wobei das Stromkollektorelement (150) einen ersten Abschnitt (151, 161), der mit einem Polabschnitt (130, 140) der zweiten Batterie verbunden ist, einen zweiten Abschnitt (152, 162), der von dem ersten Abschnitt (151) abgewinkelt ist, um mit der Elektrodenanordnung (110) in Kontakt zu sein, und einen dritten Abschnitt (153, 163) umfasst, der sich von dem zweiten Abschnitt (152, 162) erstreckt und mit der Lasche (114, 115) des unbeschichteten Teils verbunden ist.

9. Sekundärbatterie nach Anspruch 8, wobei der dritte Abschnitt (153, 163) so gebogen ist, dass er mit dem zweiten Abschnitt (152, 162) in Kontakt steht.

10. sekundäre Batterie nach Anspruch 8 oder 9, wobei der dritte Abschnitt (153, 163) mit dem zweiten Abschnitt (152, 162) verbunden ist.

11. Sekundärbatterie nach einem der Ansprüche 8 bis 10, wobei sich der dritte Abschnitt (153, 163) von dem zweiten Abschnitt (152, 162) aus erstreckt.

12. Sekundärbatterie nach Anspruch 1, die ferner einen Isolierbeutel (190) umfasst, der die Elektrodenanordnung (110) und die Halterung (119C, 119D) aufnimmt.

## Revendications

1. Une batterie secondaire comprenant :
un ensemble d'électrode (110) comprenant une languette de partie non revêtue (114, 115) ;
un élément collecteur de courant (150, 160) connecté à la languette de partie non revêtue (114, 115) faisant saillie sur une longueur depuis un côté de l'ensemble d'électrodes (110) et plié avec la languette de partie non revêtue (114, 115) vers le côté de l'ensemble d'électrodes (110) ; et
un élément de bande (119A, 119B) couvrant les régions connectées et pliées de la languette de la partie non revêtue (114, 115) et de l'élément collecteur de courant (150, 160), et
un élément de retenue (119C, 119D) fixé à l'élément de bande (119A, 119B) et à une région (117) de l'ensemble d'électrodes (110) faisant face au côté de l'ensemble d'électrodes (110), l'élément de retenue (119C, 119D) étant en outre fixé à la région pliée de l'élément collecteur de courant (150, 160) ou à la région pliée de la languette de partie non revêtue (114, 115).

2. Batterie secondaire selon la revendication 1, dans laquelle l'élément de bande (119A, 119B) est fixé à la languette de partie non revêtue (114, 115).

3. Batterie secondaire selon la revendication 1 ou 2, dans laquelle l'élément de bande (119A, 119B) est fixé à l'élément de collecteur de courant (150, 160).

4. Batterie secondaire de l'une quelconque des revendications 1 ou 2, dans laquelle l'élément de bande (119A, 119B) comprend une région fixée à la languette de partie non revêtue (114, 115) et une autre région fixée à l'ensemble d'électrode (110).

5. Batterie secondaire de l'une quelconque des revendications 1 ou 3, dans laquelle l'élément de bande (119A, 119B) comprend une région fixée à l'élément collecteur de courant (150) et une autre région fixée à l'ensemble d'électrodes (110).

6. Batterie secondaire de l'une quelconque des revendications 1 à 5, dans laquelle l'élément de bande (119A, 119B) a une résistance à la chaleur d'au moins 150°C, de préférence d'au moins 200°C, plus préférablement d'au moins 250°C.

7. Batterie secondaire de l'une quelconque des revendications 1 à 6, dans laquelle l'élément de bande (119A, 119B) comprend un polyimide, une polyéther éther cétone, un polymère à cristaux liquides ou un polyphénylène sulfure.

8. Batterie secondaire de l'une quelconque des revendications 1 à 7, dans laquelle l'élément collecteur de courant (150) comprend une première section (151, 161) connectée à une partie de borne (130, 140) de la seconde batterie, une seconde section (152, 162) courbée à partir de la première section (151) pour être en contact avec l'ensemble d'électrode (110), et une troisième section (153, 163) s'étendant à partir de la seconde section (152, 162) et connectée à la languette de partie non revêtue (114, 115).

9. Batterie secondaire selon la revendication 8, dans laquelle la troisième section (153, 163) est pliée pour être en contact avec la deuxième section (152, 162).

10. Batterie secondaire selon la revendication 8 ou 9, dans laquelle la troisième section (153, 163) est connectée à la deuxième section (152, 162).

11. Batterie secondaire de l'une quelconque des revendications 8 à 10, dans laquelle la troisième section (153, 163) s'étend depuis la deuxième section (152, 162).

12. Batterie secondaire selon la revendication 1, comprenant en outre un sac isolant (190) logeant l'ensemble d'électrodes (110) et le dispositif de retenue (119C, 119D).
